Europäisches Patentamt

(19) European Patent Office

Office européen des brevets

(11) **EP 1 191 679 B1**

(12) **EUROPÄISCHE PATENTSCHRIFT**

(45) Veröffentlichungstag und Bekanntmachung des Hinweises auf die Patenterteilung:
**31.05.2006  Patentblatt 2006/22**

(51) Int Cl.:
**H02P 25/08** *(2006.01)*

(21) Anmeldenummer: **01121894.8**

(22) Anmeldetag: **12.09.2001**

(54) **Leistungselektronisches Stellglied für Reluktanzmaschinen**

Power electronic circuit for reluctance machines

Circuit électronique de puissance pour machines de réluctance

(84) Benannte Vertragsstaaten:
**AT DE FR GB**

(30) Priorität: **22.09.2000  DE 10047035**

(43) Veröffentlichungstag der Anmeldung:
**27.03.2002  Patentblatt 2002/13**

(73) Patentinhaber: **Marquardt, Rainer, Prof. Dr.-Ing. 85521 Riemerling (DE)**

(72) Erfinder: **Marquardt, Rainer, Prof. Dr.-Ing. 85521 Riemerling (DE)**

(56) Entgegenhaltungen:
**DE-A- 4 311 274          DE-A- 19 534 727**

- **BARNES M ET AL: "Power electronic converters for switched reluctance drives" IEEE TRANSACTIONS ON POWER ELECTRONICS, NOV. 1998, IEEE, USA, Bd. 13, Nr. 6, Seiten 1100-1111, XP002279480 ISSN: 0885-8993**

**Beschreibung**

Die Erfindung betrifft Schaltungsanordnungen für leistungselektronische Stellglieder, die zum Zwecke des drehzahlvariablen Betriebs von Reluktanzmaschinen elektrische Energie aus Gleichspannungsquellen umformen. Elektrische Antriebssysteme mit geschalteten Reluktanzmaschinen (switched reluctance drives) haben einen hohen Entwicklungsstand erreicht. Die einfache und robuste Bauweise der elektrischen Maschine ist einer der wesentlichen Vorteile dieser Antriebssysteme. Spezifische Nachteile - insbesondere die hohen Drehmomentpulsationen (ungleichförmiges Drehmoment) und die starke Geräuschemission - konnten durch steuerungstechnische Maßnahmen deutlich reduziert werden (siehe z.B.: Dissertation an der Fakultät für Elektrotechnik der Universität der Bundeswehr München vom Mai 2000, Verfasser: A.Greif, Titel: "Untersuchungen an Geschalteten Reluktanzmaschinen für Elektrofahrzeuge"). Diese Maßnahmen setzen jedoch leistungselektronische Stellglieder voraus, die in einem weiten Betriebsbereich (variables Drehmoment, variable Drehzahl) die Strangströme in den Maschinenwicklungen entsprechend vorgegebenen Zeitfunktionen einprägen können. Mit den bisher bekannten leistungselektronischen Stellgliedern gelingt dies jedoch nur in einem eingeschränkten Betriebsbereich bei niedrigen Drehzahlen. Bei höheren Drehzahlen und Leistungen können die vorgegebenen Zeitfunktionen der Strangströme nicht mehr eingestellt werden (Näheres siehe z. B. o.a. Dissertation). Dadurch geht nicht nur das erwähnte Optimierungspotential bezüglich der Drehmomentpulsationen und Geräuschemissionen verloren, sondern es wird auch die generelle Leistungsfähigkeit des Antriebssystems beeinträchtigt. Letzteres betrifft insbesondere das maximal erzielbare Drehmoment und den Wirkungsgrad des Antriebs.

Aus der Literatur sind eine Fülle von Schaltungsanordnungen zur Speisung von Reluktanzmaschinen bekannt. Eine ausführliche Übersicht ist u.a. zu finden in: IEEE Transactions on Power Electronics, Vol. 13, No.6, S. 1100..1111, Verfasser: Mike Barnes, Charles Pollock. Die Vielzahl der dort gezeigten Varianten ist jedoch nur für eine Energierichtung geeignet oder hat erhebliche Einschränkungen bezüglich der freizügigen, voneinander unabhängigen Steuerungsmöglichkeit der Strangströme. Allgemein durchgesetzt hat sich deshalb vorzugsweise die Brückenschaltung, die zwei Einquadrant-Gleichstromsteller pro Strang der Maschine erfordert (in dieser Literaturstelle bezeichnet als "asymmetric halfbridge converter", siehe S.1101). Diese - auch aus anderen Anwendungen der Leistungselektronik bekannte - Grundschaltung ermöglicht sowohl beide Energierichtungen (motorischer und generatorischer Betrieb der Reluktanzmaschine) als auch die voneinander unabhängige Steuerung jedes einzelnen Strangstromes der Maschine. Viele Anwendungen - insbesondere batteriegespeiste Antriebssysteme - erfordern beide Energierichtungen (Motor-und Generatorbetrieb entsprechend Entladen und Laden der Akkumulator-Batterie) und eine gute Drehmomentqualität und Maschinenausnutzung durch freizügige Steuerungsmöglichkeit der Strangströme. Beiden Forderungen wird diese Anordnung (unter den bekannten Schaltungen) am ehesten gerecht, was auch ihre weite Verbreitung erklärt.

Der Erfindung liegt die Aufgabe zugrunde, diese bekannte Grundschaltung weiter zu verbessern - insbesondere bezüglich der Fähigkeit die Strangströme in möglichst weiten Betriebsbereichen entsprechend vorgegebenen Sollwerten einprägen zu können. Im Hinblick auf aus Akkumulator-Batterien oder Brennstoffzellen-Batterien gespeiste Antriebssysteme soll zusätzlich die Integration eines zweiten Energiespeichers (z.B. Superkondensatoren, d.h.

Kondensatoren mit Helmholtz'scher Doppelschicht) mit geringem Zusatzaufwand und eine möglichst geringe Wechselstrombelastung der Batterien gewährleistet werden. Weitere wesentliche Verbesserungen werden im folgenden noch erläutert.

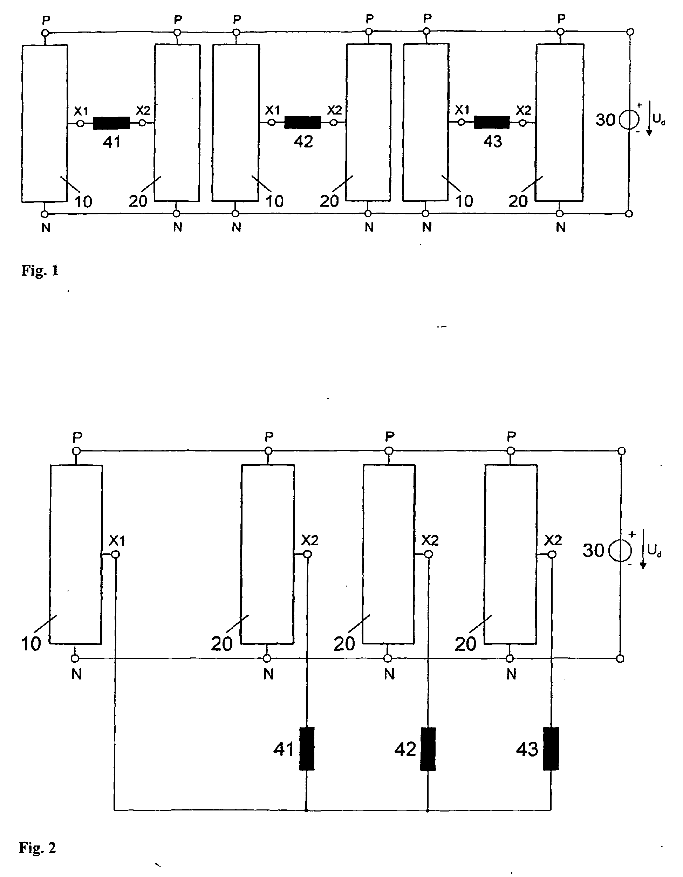

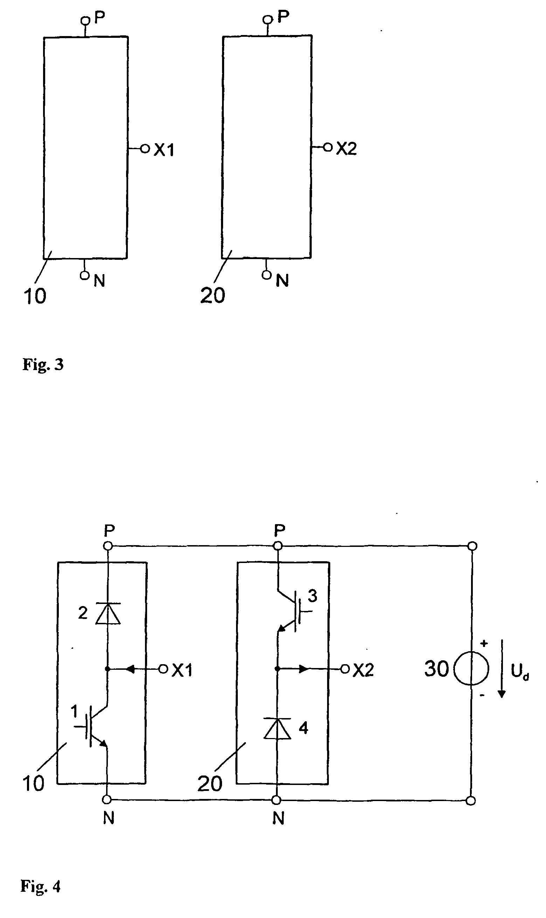

Erfindungsgemäß wird die Aufgabe gelöst durch die Merkmale des Anspruchs 1. Vorteilhafte Ausgestaltungen sind Gegenstand der Unteransprüche. Zur weiteren Erläuterung des Standes der Technik dienen im folgenden Fig. 1 bis Fig. 4. Es stellen dar:

**Fig. 1:**
Eine (z. B. aus o.a. Literatur) bekannte Anordnung zur Speisung einer Reluktanzmaschine aus einer Gleichspannungsquelle (30). Letztere kann z. B. eine Akkumulator-Batterie mit der Spannung ($U_d$) oder eine Brennstoffzellen-Batterie oder ein Gleichspannungsnetz sein. Für jeden Strang der Maschine - hier beispielhaft 3 Stränge (41), (42), (43) - sind jeweils ein Einquadrant-Gleichstromsteller für die positive Laststromrichtung (10) und ein Einquadrant-Gleichstromsteller für die negative Laststromrichtung (20) vorhanden. Diese Anordnung ermöglicht sowohl eine voneinander unabhängige Steuerung der Strangströme als auch beide Energierichtungen, d.h. sowohl motorischen als auch generatorischen Betrieb der Maschine. Bei letzterem erfolgt Rückspeisung von Energie in die Gleichspannungsquelle (30).

**Fig. 2:**
Eine aus Fig. 1 abgeleitete, ebenfalls bekannte Anordnung mit einem gemeinsamen Gleichstromsteller (10) für alle Stränge. Diese Anordnung erlaubt im Gegensatz zu Fig. 1 keine unabhängige Steuerung der Strangströme mehr und ist deshalb vorwiegend nur für niedrige Anforderungen oder kleine Leistungen einsetzbar.

**Fig. 3:**
Eine Übersichtsdarstellung der Gleichstromsteller (10) und (20) als Funktionsblöcke mit den Anschlußpunkten P, N, X1 bzw. X2.

**Fig. 4:**
Die interne Schaltung der Funktionsblöcke (10) und (20).

Gemäß der Erfindung werden die Funktionsblöcke (10) bzw. (20) durch neuartige Funktionsblöcke (100) oder (101) bzw. (200) oder (201) ersetzt, die eine erfindungsgemäß erweiterte Funktionalität aufweisen. Die Grundstruktur der bekannten Schaltungen nach Fig. 1 oder Fig. 2 bleibt dabei erhalten. Bei diesem Vorgehen besteht zusätzlich die Freiheit, einen, mehrere oder alle Funktionsblöcke durch erfindungsgemäß erweiterte Funktionsblöcke zu ersetzen, so daß je nach Anforderungen ein Kompromiß zwischen Aufwand und Nutzen geschlossen werden kann.

Für die steuerbaren elektronischen Schalter (1), (3), (5), (7) bestehen bei allen erfindungsgemäßen Anordnungen keine Forderungen nach Sperrfähigkeit in der Rückwärtsrichtung. Dadurch sind moderne, verlustoptimierte Bauelemente wie asymmetrisch sperrende IGBT, aber auch rückwärtsleitende Bauelemente wie MOSFET oder CoolMOS® einsetzbar. Für die Dioden (2), (4), (6), (8) bestehen ebenfalls keine speziellen Anforderungen neben der bekannten Erfordernis, daß Sperrspannung und Schaltgeschwindigkeit an die Werte der steuerbaren elektronischen Schalter angepaßt sein sollten.

In allen Darstellungen der Funktionsblöcke (10) oder (100) oder (101), sowie (20) oder (200) oder (201) sind bezeichnet mit:

**P:**
Der Plusanschluß, der mit dem positiven Pol der Gleichspannungsquelle (30) zu verbinden ist.

**N:**
Der Minusanschluß, der mit dem negativen Pol der Gleichspannungsquelle (30) zu verbinden ist.

**X1**:
Der Leistungsanschluß eines Funktionsblocks (10) oder (100) oder (101), der mit einem Anschluß einer der Maschinenstränge (41) oder (42) oder (43) zu verbinden ist, aus welchem der Strom hinausfließen soll (Definition entsprechend technischer Stromrichtung).

**X2:**
Der Lastanschluß eines Funktionsblocks (20) oder (200) oder (201), der mit einem Anschluß einer der Maschinenstränge (41) oder (42) oder (43) zu verbinden ist, in welchen der Strom hineinfließen soll (Definition entsprechend technischer Stromrichtung).

Die Ausgangsspannung eines Funktionsblocks (10) oder (100) oder (101) ist durchgehend mit $U_{x1}$, die Ausgangsspannung eines Funktionsblocks (20) oder (200) oder (201) ist durchgehend mit $U_{x2}$ bezeichnet. Sowohl $U_{x1}$ als auch $U_{x2}$ sind jeweils gegen den Anschluß N (als Bezugspotential) gemessen.

Gemäß der Erfindung werden, wie bereits erwähnt, die Funktionsblöcke (10) bzw. (20) durch neuartige Funktionsblöcke (100) oder (101) bzw. (200) oder (201) ersetzt, die eine erfindungsgemäß erweiterte Funktionalität aufweisen. Die erweiterte Funktionalität beinhaltet folgende wesentliche Punkte:

a) Erweiterung des Bereichs der möglichen Ausgangsspannungen $U_{x1}$ bzw. $U_{x2}$ auf positive Werte, die positiver als das Potential des Anschlusses P sind und auf negative Werte, die negativer als das Potential des Anschlusses N sind.

b) Erweiterung der Zahl der ansteuerbaren Schaltzustände von zwei auf mindestens vier.

c) Erweiterung um einen elektrostatischen oder elektrochemischen Energiespeicher.

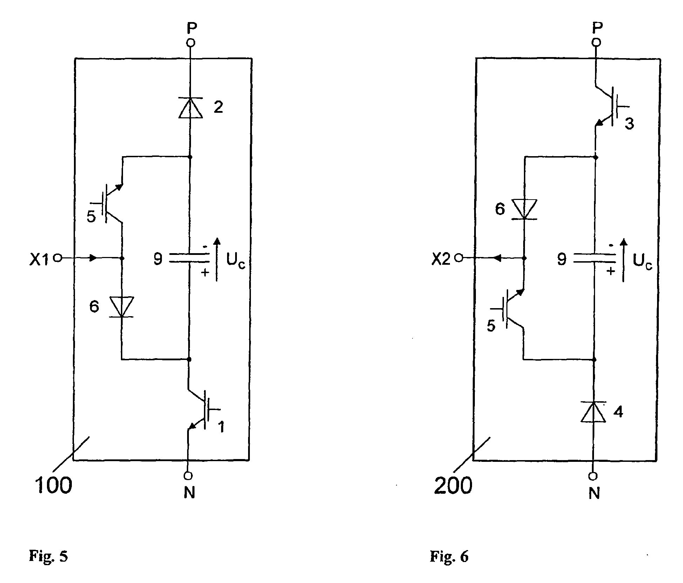

Vorteilhafte Schaltungsanordnungen, die diese erweiterte Funktionalität realisieren, sind in Fig. 5 bis Fig. 8 angegeben.

Es stellen dar:

**Fig. 5:**
Eine erfindungsgemäße Schaltungsanordnung (100) mit 4 Schaltzuständen und einem Kondensator (9) als Energiespeicher, die als Ersatz für den Gleichstromsteller mit positiver Laststromrichtung (10) einsetzbar ist.

**Fig. 6:**
Eine erfindungsgemäße Schaltungsanordnung (200) mit 4 Schaltzuständen und einem Kondensator (9) als Energiespeicher, die als Ersatz für den Gleichstromsteller mit negativer Laststromrichtung (20) einsetzbar ist.

**Fig. 7:**
Eine erfindungsgemäße Schaltungsanordnung (101) mit 8 Schaltzuständen und einer Superkondensator-Batterie (31) als Energiespeicher, die als Ersatz für den Gleichstromsteller mit positiver Laststromrichtung (10) einsetzbar ist.

**Fig. 8:**
Eine erfindungsgemäße Schaltungsanordnung (201) mit 8 Schaltzuständen und einer Superkondensator-Batterie (31) als Energiespeicher, die als Ersatz für den Gleichstromsteller mit negativer Laststromrichtung (20) einsetzbar ist.

Der Energiespeicher (9) ist vorzugsweise ein Kondensator; der Energiespeicher (31) eine Batterie aus Superkondensatoren. Diese technische Ausprägung ist jedoch in keiner Weise zwingend. Vielmehr können bei allen erfindungsgemäßen Anordnungen sowohl die Energiespeicher (9) und (31) als auch (30) - falls dort ein Energiespeicher vorhanden ist - beliebig gewählt werden. Das heißt, daß jeweils sowohl ein oder mehrere konventionelle Kondensatoren, eine Superkondensator-Batterie oder eine Akkumulator-Batterie einsetzbar sind. Auch Brennstoffzellen sind grundsätzlich einsetzbar - vorzugsweise als Gleichspannungsquelle (30).

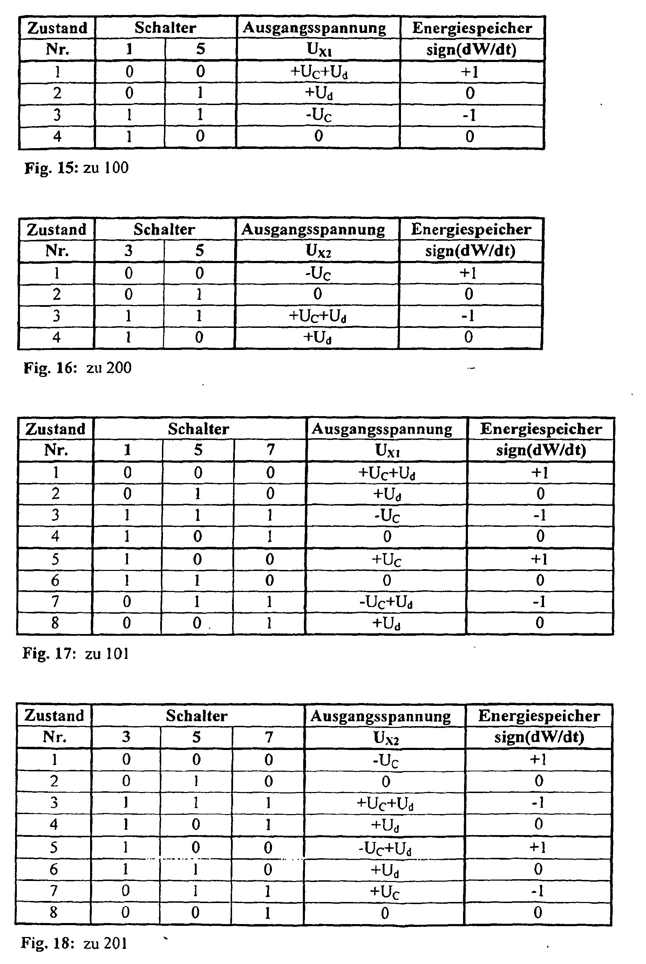

Zur Erläuterung der erfindungsgemäß erweiterten Funktionalität sind neben den Schaltungsanordnungen in Fig. 5 bis 8 auch jeweils zugehörige Tabellen (Fig. 15 bis Fig. 18) angegeben. Diese enthalten:

- Die möglichen Schaltzustände (fortlaufend numeriert).
- Die zum Schaltzustand zugehörige Schaltstellung der steuerbaren elektronischen Schalter (1), (3), (5), (7). Mit "0" ist jeweils der Ausschaltzustand, mit "1" ist der Einschaltzustand des steuerbaren elektronischen Schalters bezeichnet.
- Die resultierende Ausgangsspannung $U_{x1}$ bzw. $U_{x2}$.
- Die resultierende Änderung der im betreffenden Funktionsblock gespeicherten Energie W. Eine Zunahme dieser Energie ist mit "+1", eine Abnahme mit "-1" bezeichnet. Eine "0" bedeutet, daß in dem zugehörigen Schaltzustand keine Änderung der im Funktionsblock gespeicherten Energie W erfolgt.

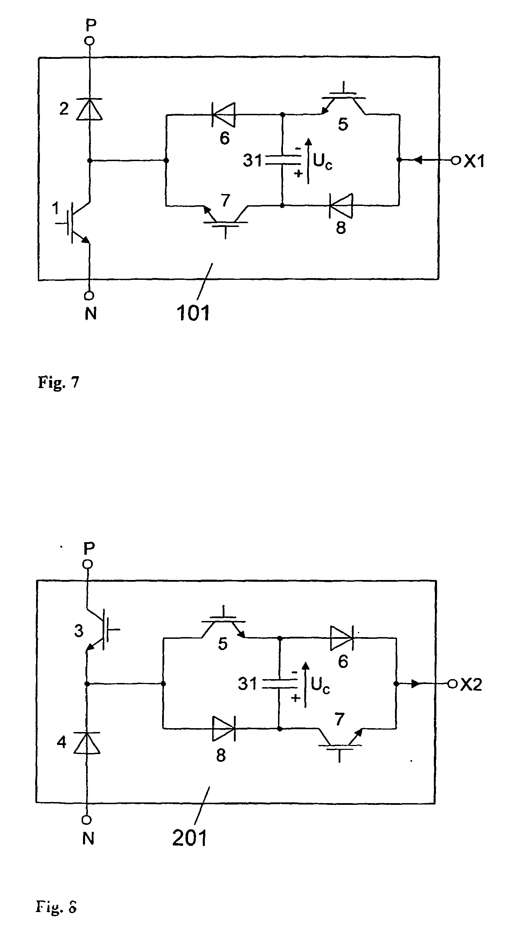

Zur weiteren Erläuterung sei im folgenden beispielhaft der Funktionsblock (200) - siehe Fig.6 - mit dem bekannten Gleichstromsteller (20) verglichen. Letzterer enthält keinen Energiespeicher und kann nur die Zustände Nr. 2 und Nr. 4 entsprechend Fig. 16 annehmen. Die erfindungsgemäße Schaltungsanordnung kann zusätzlich die Schaltzustände Nr. 1 bzw. Nr. 3 realisieren. In diesen beiden Zuständen ist die Ausgangsspannung ($U_{x2}$) negativer als das Potential an N bzw. positiver als das Potential an P.

Im Zustand Nr. 3 nimmt die gespeicherte Energie W ab und die Ausgangsspannung hat einen hohen positiven Wert. Dieser Zustand kann dazu genutzt werden, den Strom in einem Strang der Maschine (41) oder (42) oder (43) schneller aufzubauen oder trotz hoher Gegenspannung der Maschine besser auf dem Sollwert zu halten, als es im Zustand Nr. 4 möglich ist. Eine völlige Entladung des Energiespeichers (9) ist bei genügend langer Zeitdauer des Zustandes Nr. 3 möglich und zulässig. Der Energiespeicher (9) bleibt dann im entladenen Zustand ($U_C = 0$) stehen, weil der Laststrom selbständig vom elektronischen Schalter (5) auf die Diode (6) kommutiert. Die Spannung ($U_c$) über dem Energiespeicher bleibt grundsätzlich unipolar. Diese Eigenschaft gilt für alle erfindungsgemäßen Schaltungsanordnungen und ermöglicht z.B. den Einsatz von Elektrolytkondensatoren.

Im Zustand Nr. 1 nimmt die gespeicherte Energie W zu und die Ausgangsspannung hat einen hohen negativen Wert. Dieser Zustand kann dazu genutzt werden, den Strom in einem Strang der Maschine (41) oder (42) oder (43) schneller abzubauen oder trotz hoher treibender Spannung der Maschine besser auf den Sollwert zu begrenzen, als es im Zustand Nr. 2 möglich ist.

Zur weiteren Erläuterung der Erfindung und vorteilhafter Ausgestaltungen ist es im folgenden sinnvoll, die erfindungsgemäßen Funktionsblöcke im Zusammenhang mit der Gesamtschaltung zu betrachten. Wie erwähnt, werden letztere in den bekannten Grundstrukturen nach Fig. 1 oder Fig. 2 eingesetzt. Die Spannung an einem Strang der Maschine (41), (42) oder (43) ergibt sich in diesen Grundstrukturen grundsätzlich als Differenz der Ausgangsspannungen der zwei beteiligten Funktionsblöcke jeweils zu ($U_{x2} - U_{x1}$). Die Stromrichtung in jedem Strang der Maschine ist durch die eingesetzten Funktionsblöcke bereits eindeutig festgelegt.

Durch die Schaltzustände der beiden beteiligten Funktionsblöcke ist die Spannung ($U_{x2} - U_{x1}$) vorgegeben. Die bekannte Schaltung nach Fig. 1 kann die Spannungswerte ($U_{x2} - U_{x1}$) = $+U_d$ und ($U_{x2} - U_{x1}$) = $-U_d$, sowie ($U_{x2} - U_{x1}$) = 0 realisieren. Der erstgenannte Wert ($+U_d$) dient dabei zum Strangstromaufbau, der zweite Wert ($-U_d$) zum Strangstromabbau, der dritte Wert (0) ist nicht unbedingt notwendig. Es ist jedoch bekannt, daß seine temporäre Nutzung als Zwischenzustand die Güte der Strangstromregelung günstig beeinflußt. Dies ist u.a. in der erstgenannten Literaturstelle (Dissertation, A. Greif) erläutert.

Bei dieser Schaltung (Fig. 1) tritt eine unerwünscht hohe Leistungspulsation in der Gleichspannungsquelle (30) auf, weil die Energie zum periodischen Aufbau bzw. Abbau des Strangstromes jeweils in vollem Umfang aus der Gleichspannungsquelle entnommen bzw. zurückgespeist wird. Dieser Nachteil drückt sich in einer hohen Wechselstrombelastung der Gleichspannungsquelle (30) aus. Diese Strombelastung ist für eine Akkumulatorenbatterie oder eine Brennstoffzelle sehr ungünstig und macht zur Abhilfe die Parallelschaltung großer Filterkondensatoren erforderlich.

Die Schaltung nach Fig. 2 ist weniger aufwendig als Fig. 1, hat jedoch erhebliche Einschränkungen, weil die Spannungen ($U_{x2} - U_{x1}$) über den Strängen der Maschine und damit auch die Strangströme nicht mehr unabhängig voneinander steuerbar sind.

Dieser gravierende Nachteil, der den Einsatz dieser - gegenüber Fig. 1 - bauelementesparenden Anordnung nur für niedrige Anforderungen oder kleine Leistungen erlaubt, läßt sich ebenfalls beseitigen - wie im folgenden gezeigt wird. Zur weiteren Erläuterung dient:

**Fig. 9:**
Eine erfindungsgemäße Schaltungsanordnung, die aus der bekannten Anordnung nach Fig. 2 durch Ersatz der Funktionsblöcke (20) gegen die Funktionsblöcke (200) hervorgeht. An Stelle der Funktionsblöcke (200) sind auch Funktionsblöcke (201) einsetzbar.

In dieser Anordnung ist es möglich, aber nicht zwingend, den Schaltzustand des Funktionsblocks (10) nur bei gewünschtem Wechsel der Energierichtung in der Gleichspannungsquelle (30) umzuschalten, d.h.:

- Energieentnahme aus (30), steuerbarer elektronischer Schalter (1) eingeschaltet: $U_{x1} = 0$.
- Energierückspeisung in (30), steuerbarer elektronischer Schalter (1) ausgeschaltet: $U_{x1} = U_d$.

Zunächst sei die erstgenannte Betriebsart ($U_{x1} = 0$) erläutert: Jeder der Ströme in den Strängen (41), (42) und (43) ist unabhängig von den anderen mit der Stellgröße $(U_{x2} - U_{x1}) = U_{x2}$, d.h. mit der Ausgangsspannung $(U_{x2})$ des am betreffenden Strang angeschlossenen Funktionsblockes (200) steuerbar. Zu diesem Zweck stehen die den vier Schaltzuständen nach Fig. 16 zugeordneten Ausgangsspannungen $(U_{x2})$ zur Verfügung. Entsprechend Fig. 16 ist der Zustand Nr. 4 zum Aufbau des Strangstromes, Nr. 3 zum beschleunigten Aufbau oder Halten des Strangstromes auf dem Sollwert, Nr. 2 als temporärer Zwischenzustand und Nr. 1 zum Abbau des Strangstromes nutzbar - wie bereits am Beispiel von Fig. 6 erläutert.

Die Kapazität des Kondensators (9) kann sinnvollerweise so bemessen werden, daß er bei den maximalen Spitzenwerten der Strangströme im Zustand Nr. 1 eine vorgegebene maximale Spannung ($\hat{U}_c$) nicht überschreitet. Diese Bemessung erfordert genaue Maschinendaten - wie die nichtlineare Stranginduktivität und die inneren Maschinenspannungen - ist aber mit heute üblichen Simulationswerkzeugen problemlos möglich. Einen brauchbaren Startwert für die erforderliche Kapazität (C) erhält man aus der Gleichsetzung der magnetischen Energie im betreffenden Strang vor dem Abbau des Strangstromes ($W_m$) mit der elektrostatischen Energie ($W_c$) im Kondensator (9) nach Abbau des Strangstromes ($W_c$). Aus $W_c = W_m$ folgt Gleichung 1:

$$\frac{1}{2} C\, \hat{U}_c^2 = \frac{1}{2} L \hat{J}^2, \qquad (1)$$

wo rechts die magnetische Energie ($W_m$) mit Hilfe der wirksamen Stranginduktivität (L) und dem Spitzenwert des Strangstromes ($\hat{J}$) ausgedrückt ist. Im allgemeinen ist hier für (L) wegen der hohen Ströme und der resultierenden, starken Sättigung des magnetischen Kreises ein bereits weitgehend strom- und rotorpositionsunabhängiger unterer Grenzwert der Stranginduktivität einzusetzen. Ergibt die Simulationsrechnung eine Überschreitung der vorgegebenen Spannung ($\hat{U}_c$), ist schrittweise die Kapazität (C) zu erhöhen. Ein wesentlicher Vorteil aller erfindungsgemäßen Funktionsblöcke besteht darin, daß der Stromabbau über den Kondensatorzweig erfolgt, was auch bei anfangs entladenem Kondensator ($U_c = 0$) immer einen relativ raschen Stromabbau ermöglicht.

Eine sehr einfache - im allgemeinen völlig ausreichende - Steuerungsstrategie besteht darin, die Spannung ($U_c$) vor dem gewünschten Abbau des Strangstromes (d.h. vor Ende des Strangstromimpulses) bereits zu Null zu machen. Diese Voraussetzung läßt sich immer durch eine genügende Dauer, der mit sign(dW/dt) = - 1 gekennzeichneten Schaltzustände vor Beginn des Strangstromabbaus erreichen. Diese Strategie erübrigt auch eine meßtechnische Erfassung der Kondensatorspannung ($U_c$), weil der Minimalwert ($U_c = 0$) bei allen erfindungsgemäßen Funktionsblöcken (100), (101) bzw. (200), (201) nicht unterschritten werden kann und stabil ist. Obwohl die verfügbaren Schaltzustände auch eine gezielte Regelung der Kondensatorspannung ($U_c$) ermöglichen, wird man als völlig ausreichend vorzugsweise die Bemessung von C auf einen minimalen Wert und die vorab beschriebene einfache Steuerungsstrategie wählen. Die maximale Spannung ($\hat{U}_c$) kann in weiten Grenzen je nach der Spannung ($U_d$) der Gleichspannungsquelle (30) und der max. zulässigen Spannung der Halbleiter gewählt werden.

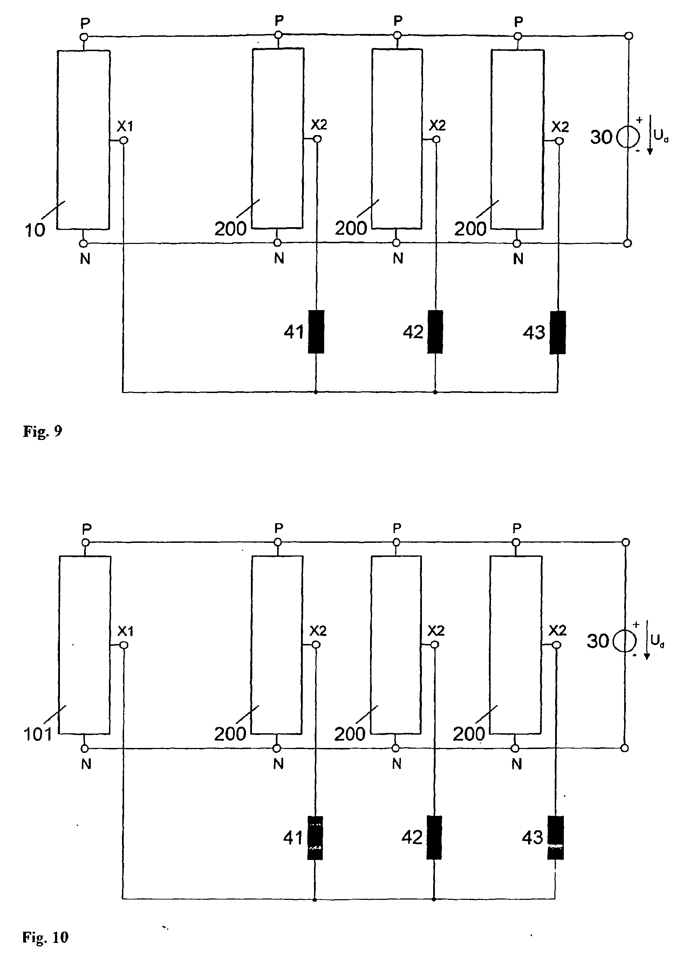

Für die andere Energierichtung (Energierückspeisung in die Gleichspannungsquelle (30)) gilt analog: Es ist möglich, aber nicht zwingend, den Schaltzustand des Funktionsblocks (10) durchgehend so zu lassen, daß $U_{x1} = + U_d$ wird, d.h. der steuerbare elektronische Schalter (1) ist durchgehend ausgeschaltet. Jeder der Ströme in den Strängen (41), (42), (43) ist unabhängig von den anderen mit der Stellgröße $(U_{x2} - U_d)$, d.h. mit der jeweils um ($U_d$) verminderten Ausgangsspannung des am betreffenden Strang angeschlossenen Funktionsblockes (200) steuerbar. Es stehen wiederum alle vier Schaltzustände zur Verfügung. Da in diesem generatorischen Betrieb der Reluktanzmaschine die innere Maschinenspannung ihr Vorzeichen wechselt, ist die um den Betrag von ($U_d$) ins Negative verschobene, resultierende Spannung pro Strang den Anforderungen gut angepaßt: Im Zustand Nr. 4 erfolgt der Stromaufbau mit Hilfe der inneren Maschinenspannung, während im Zustand Nr. 3 ein beschleunigter Stromaufbau erzielbar ist. Zustand Nr. 2 ist ein temporärer Zwischenzustand und im Zustand Nr. 1 steht zum Stromabbau oder zur Begrenzung des Strangstromes auf den Sollwert eine sehr hohe resultierende Gegenspannung ($-U_c - U_d$) zur Verfügung. Zusammenfassend ergeben sich folgende wesentliche Vorteile der erfindungsgemäßen Anordnung Fig. 9 gegenüber der bekannten Anordnung Fig. 1.

- Die Strangströme können erheblich besser, entsprechend vorgegebener, optimierter Sollwertfunktionen geführt werden.
- Die Nutzung der zusätzlichen Schaltzustände ermöglicht es, den Einfluß von Spannungsschwankungen der Gleichspannungsquelle (30) auf die Strangströme zu reduzieren.
- Die Leistungspulsationen in der Gleichspannungsquelle (30) werden erheblich reduziert (unerwünschte Wechselstrombelastung).

- Ein zweiter Energiespeicher (z. B. Superkondensator-Batterie) ist auf vorteilhafte Weise in das Antriebssystem integrierbar (wie im folgenden gezeigt wird).

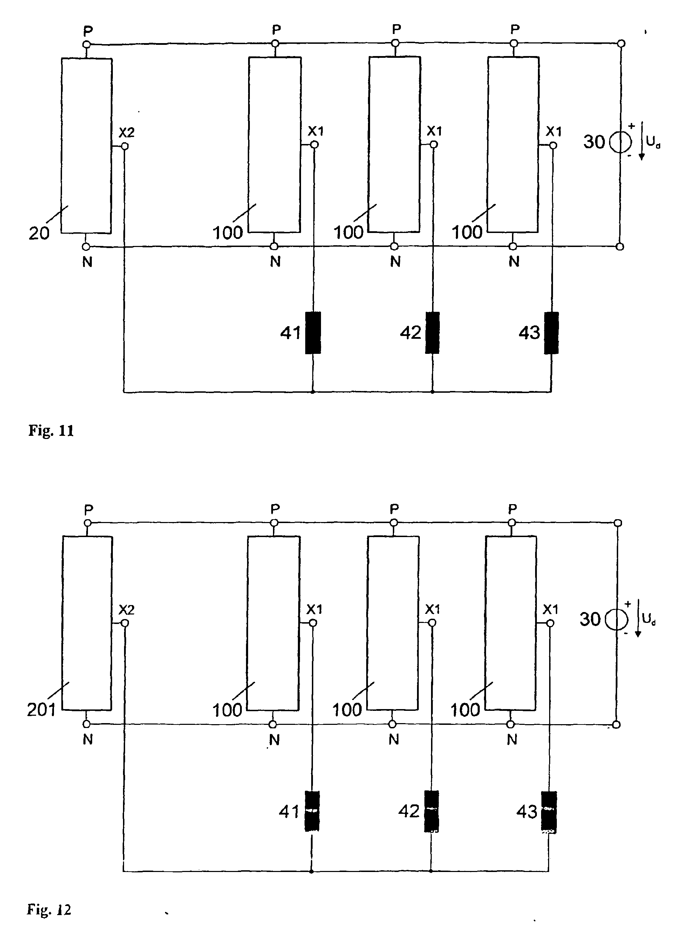

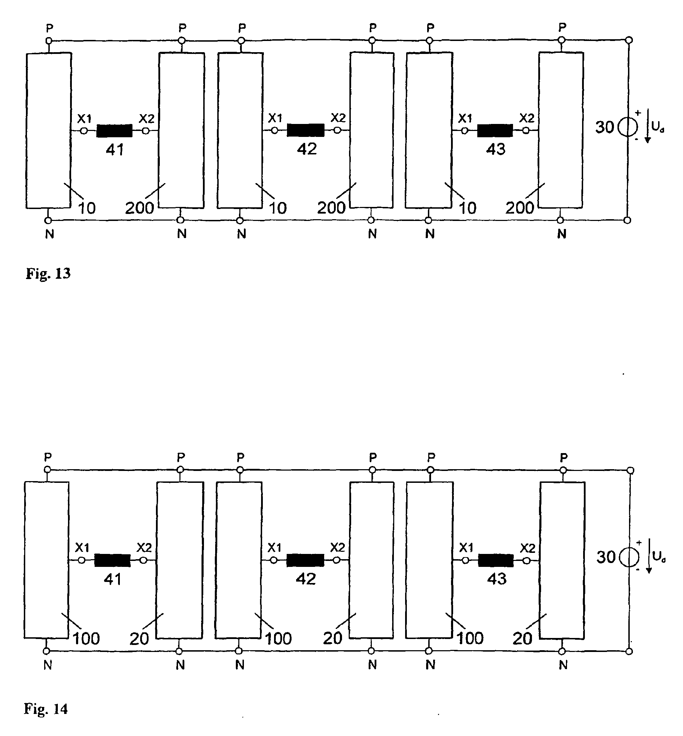

Ein zweiter Energiespeicher (31), der kurzzeitige Leistungsspitzen im Bereich einiger Sekunden bis 1 Minute decken kann, ist für viele elektrische Antriebssysteme wünschenswert. Insbesondere für Antriebssysteme, die aus Akkumulatoren oder Brennstoffzellen gespeist werden, ist dies für Beschleunigungs- und Bremsvorgange äußerst vorteilhart. Als zweiter Energiespeicher kommen nach heutigem technischen Stand vorwiegend Superkondensator-Batterien oder eventuell auch spezielle Akkumulator-Batterien niedrigerer Kapazität und niedrigen Innenwiderstandes in Frage. Auf Grund der sehr hohen Spannungstoleranzen (ladezustands- und lastabhängig) erfordert die Ankopplung dieser Energiespeicher an das Antriebssystem weitere leistungselektronische Stellglieder. Eine bekannte Lösung besteht darin, einen Zweiquadrant-Gleichstromsteller zwischen dem Energiespeicher (31) und der Gleichspannungsquelle (30) anzuordnen. Dieser Steller ist jedoch für beide Energierichtungen jeweils für die auftretenden Spitzenleistungen zu dimensionieren und benötigt eine relativ große, verlustbehaftete Glättungsdrossel. Er erzeugt zudem wiederum eine unerwünschte, hohe Wechselstrombelastung in der Gleichspannungsquelle (30). Bei den erfindungsgemäßen Schaltungsanordnungen besteht die vorteilhafte Möglichkeit, den Energiespeicher (31) in einem der erfindungsgemäßen Funktionsblöcke anzuordnen. Es werden dann sowohl der zusätzliche Zweiquadrant-Gleichstromsteller, die Glättungsdrossel und die unerwünschte Wechselstrombelastung der Gleichspannungsquelle (30) vermieden. Eine solche Lösung zeigt Fig. 10.

**Fig. 10:**
Eine erfindungsgemäße Schaltungsanordnung, die aus der nach Fig. 9 durch Ersatz des Funktionsblocks (10) gegen einen Funktionsblock (101) hervorgeht. An Stelle des Funktionsblocks (101) ist auch ein Funktionsblock (100) einsetzbar.

Der zweite Energiespeicher (31) liegt bei dieser Anordnung in einem Stromkreis, der vom Summenstrom des Motors (Summe der Strangströme in (41), (42) und (43)) durchflossen wird. Dies hat zwei erhebliche Vorteile:

- Die Summe der Strangströme stellt einen gut geglätteten Gleichstrom dar (nur geringe Wechselstromanteile in (31) - auch ohne Glättungsdrossel).
- Die Summe der Gleichspannungen ($U_d + U_c$) steht statt ($U_d$) für die Maschine zur Verfügung.

Letzteres ist sehr vorteilhaft, weil die Gleichspannungen von Akkumulator-Batterien, Brennstoffzellen, Superkondensator-Batterien u.ä. im allgemeinen unerwünscht klein sind - eine Spannungserhöhung mittels Erhöhung der Zellenzahl hingegen den Aufwand vergrößert.

Die weitere Erläuterung sei im folgenden ähnlich der von Fig. 9 gegliedert: In der Anordnung nach Fig. 10 ist es analog zu Fig. 9 möglich, aber ebenfalls nicht zwingend, den Schaltzustand des Funktionsblocks (101) nur bei gewünschtem Wechsel der Energierichtung in der Gleichspannungsquelle (30) umzuschalten, d.h.:

- Energieentnahme aus (30), steuerbarer elektronischer Schalter (1) eingeschaltet:

$U_{x1} = 0$ entsprechend Zustand Nr. 4 oder 6 nach Fig. 17
oder $U_{x1} = + U_c$ entsprechend Zustand Nr. 5 nach Fig. 17
oder $U_{x1} = - U_c$ entsprechend Zustand Nr. 3 nach Fig. 17

- Energierückspeisung in (30), steuerbarer elektronischer Schalter (1) ausgeschaltet:

$U_{x1} = + U_d$ entsprechend Zustand Nr. 2 oder 8 nach Fig. 17
oder $U_{x1} = + U_d + U_c$ entsprechend Zustand Nr. 1 nach Fig. 17
oder $U_{x1} = + U_d - U_c$ entsprechend Zustand Nr. 7 nach Fig. 17

Zunächst sei die erstgenannte Betriebsart (Energieentnahme aus (30)) erläutert: der dort erstgenannte Zustand ($U_{x1} = 0$) entspricht genau den bei Fig. 9 erläuterten Verhältnissen, da der Energiespeicher (31) nicht in den Stromkreis geschaltet ist. Der mittlere Zustand ($U_{x1} = + U_c$) bedeutet Energieaufnahme des Speichers (31), der letztgenannte Zustand ($U_{x1} = -U_c$) bedeutet Energieabgabe des Speichers (31) - wie auch in Fig. 17 angegeben. Im letztgenannten Zustand (Nr. 3 nach Fig. 17) kann sowohl Energie aus dem zweiten Energiespeicher (31) als auch aus der Gleichspannungsquelle (30) entnommen werden. Dies ist sinnvoll für Beschleunigungsphasen im motorischen Betrieb der Reluktanzmaschine oder für Startvorgänge bei Starter/Generator-Systemen.

Falls die Gleichspannungsquelle (30) möglichst wenig belastet werden soll, kann für die Funktionsblöcke (200) der in der zugehörigen Fig. 16 enthaltene Zustand Nr. 4 vermieden werden. Dies ist möglich und sinnvoll, falls kritische Bordnetzverbraucher von (30) gespeist werden und ein starkes Zusammenbrechen der Spannung ($U_d$) unter hoher Strombelastung vermieden werden muß. Die voneinander unabhängige Steuerung jedes Strangstromes kann weiterhin mit der Ausgangsspannung ($U_{x2}$) des jeweils zugeordneten Funktionsblocks (200) erfolgen. Zusätzlich zu Zustand Nr. 3 nach Fig. 16 steht nun auch Zustand Nr. 2 mit der Spannung

($U_C$) des Energiespeichers (31) zum Aufbau des Strangstromes zur Verfügung. Im Zustand Nr. 1 nach Fig. 16 steht der Kondensatorzweig mit (9) zum Stromabbau zur Verfügung. Der rasche Stromabbau ist hiermit gewährleistet. Im Unterschied zu Fig. 9 erhöht sich lediglich der Spitzenwert der Kondensatorspannung ($\hat{U}_c$) um die Spannung des Energiespeichers (31). Falls zum schnellen Stromaufbau oder Halten des Strangstromes auf dem Sollwert (bei höheren Drehzahlen) die Zustände Nr. 3 und Nr. 4 nach Fig. 16 notwendig sind, können diese auch genutzt werden. Soll die Gleichspannungsquelle (30) hingegen aus o.a. Gründen möglichst nicht belastet werden, reicht es aus, den Zustand Nr. 3 nach Fig. 16 nur mit sehr kleinem Tastverhältnis zum Zwecke der periodischen Entladung des Kondensators (9) und den Zustand Nr. 4 gar nicht zu nutzen. Auch Zwischenzustände mit beliebiger Leistungsaufteilung zwischen (30) und (31) sind einstellbar.

Eine weitere Möglichkeit der erfindungsgemäßen Schaltungsanordnung (Fig. 10), besteht darin, bei stehender Welle des Reluktanzmotors den Energiespeicher (31) aus der Gleichspannungsquelle (30) zu laden. Zu diesem Zwecke kann der Funktionsblock (101) in den Zustand Nr. 5 (nach Fig. 17) gesteuert werden. Durch periodisches Schalten des Funktionsblockes (200) zwischen dessen Zuständen Nr. 1 und 3 (nach Fig. 16) ist dann ein Aufladen von (31) aus (30) steuerbar (z.B. um im Anschluß, wie vorstehend beschrieben, mit der Energie aus (31) motorisch zu starten). Falls die Spannung ($U_d$) der Gleichspannungsquelle kleiner als die Spannung ($U_c$) des Energiespeichers (31) ist, kann zum Aufbau des Ladestroms der Funktionsblock (101) zeitweise in den Zustand Nr. 4 oder Nr. 6 (nach Fig. 17) geschaltet werden. Möglich ist es auch, nicht nur einen, sondern alle Funktionsblöcke (200) phasengleich und synchron zu takten. Auch dann ist gewährleistet, daß die Welle der Maschine in diesem Ladebetrieb nicht rotiert - es sind jedoch höhere Ladeströme erzielbar.

Auch im generatorischen Betrieb der Reluktanzmaschine ist es möglich, die Summe der Gleichspannungen von (30) und (31), d.h. ($U_d + U_c$) statt ($U_d$) für die Maschine zu nutzen. Die Leistungsaufteilung zwischen der Gleichspannungsquelle (30) und dem Energiespeicher (31) ist wiederum einstellbar. Als praktisch relevant ist hier folgender Grenzfall von Interesse: Die Energierückspeisung nur in den Energiespeicher (31). Dieser Fall liegt vor, wenn die Gleichspannungsquelle (30) eine Brennstoffzelle ist, oder wenn die eingesetzte Akkumulator-Batterie hohe Leistungsspitzen beim Laden nicht verträgt. Für diesen Betriebsfall kann der Funktionsblock (101) in den Zustand Nr. 5 (nach Fig. 17) gesteuert werden. Die Strangströme können auch hier - wie bereits mehrfach beschrieben - unabhängig voneinander mit der Ausgangsspannung ($U_{x2}$) des jeweils zugeordneten Funktionsblockes (200) gesteuert werden. Betrachtet man die Schaltzustände des Funktionsblocks (101), erkennt man folgende Möglichkeit zur Vereinfachung: Der steuerbare elektronische Schalter (1) kann immer eingeschaltet bleiben. Er kann damit, ebenso wie die immer gesperrte Diode (2) eingespart werden. Voraussetzung ist nur, daß Energierückspeisung ausschließlich in den Energiespeicher (31) und nicht in die Gleichspannungsquelle (30) gewünscht wird.

**Fig. 11:**
Eine erfindungsgemäße Schaltungsanordnung, die eine gegenüber Fig. 9 gleichwertige Funktionalität, aber die umgekehrte Polarität der Ströme in den Strängen (41), (42), (43) ergibt. Eine solche Variante mit umgekehrter Polarität der Strangströme ist bei jeder erfindungsgemäßen Schaltungsanordnung möglich. Sie ist auch bei den bekannten Schaltungsanordnungen nach Fig. 1 und Fig. 2 möglich. Diese Variante läßt sich immer erzeugen durch Vertauschen der Funktionsblöcke:

- (10) gegen (20) und umgekehrt
- (100) gegen (200) und umgekehrt
- (101) gegen (201) und umgekehrt

und wird hier nur einmalig (der Vollständigkeit halber) erwähnt. Sie ist technisch gesehen trivial, da die Stromrichtung für die Funktion der Reluktanzmaschine ohne Bedeutung ist und sich zudem auch durch Vertauschen der Anschlußpunkte jeden Stranges (41), (42), (43) umkehren ließe.

**Fig. 12:**
Eine erfindungsgemäße Schaltungsanordnung, die aus Fig. 11 durch Ersatz des Funktionsblocks (20) gegen einen Funktionsblock (201) hervorgeht. An Stelle des Funktionsblocks (201) ist auch ein Funktionsblock (200) einsetzbar.

**Fig. 13:**
Eine erfindungsgemäße Schaltungsanordnung, die aus der bekannten Anordnung nach Fig. 1 durch Ersatz der Funktionsblöcke (20) durch Funktionsblöcke (200) hervorgeht. An Stelle der Funktionsblöcke (200) sind auch Funktionsblöcke (201) einsetzbar.

**Fig. 14:**
Eine erfindungsgemäße Schaltungsanordnung, die aus der bekannten Anordnung nach Fig. 1 durch Ersatz der Funktionsblöcke (10) gegen Funktionsblöcke (100) hervorgeht. An Stelle der Funktionsblöcke (100) sind auch Funktionsblöcke (101) einsetzbar.

**Patentansprüche**

1. Schaltungsanordnungen für leistungselektronische Stellglieder, die zum Zwecke des drehzahlvariablen Betriebs von Reluktanzmaschinen mit Hilfe von Brückenschaltungen aus Einquadrant-Gleichstromstellern für positive Laststromrichtung (10) und Einquadrant-Gleichstromstellern für negative Laststromrichtung (20) elektrische Energie aus Gleichspannungsquellen (30) umformen, **dadurch gekennzeichnet daß** einer, mehrere oder alle Einquadrant-Gleichstromsteller [(10) bzw. (20)] durch leistungsseitig anschlußkompatible Funktionsblöcke [(100) oder (101) bzw. (200) oder (201)] mit einem internen Energiespeicher ((9) oder (31)) ersetzt werden, die mindestens einen zusätzlichen Schaltzustand aufweisen, in dem die Ausgangsspannung positiver als bei Einquadrant-Gleichstromstellern ((10) oder (20)) ist, und mindestens einen weiteren zusätzlichen Schaltzustand aufweisen, in dem die Ausgangsspannung negativer als bei Einquadrant-Gleichstromstellern ((10) oder (20)) ist.

2. Schaltungsanordnung nach Anspruch 1, **dadurch gekennzeichnet, daß** der Einquadrant-Gleichstromsteller für positive Laststromrichtung (10) gemeinsam für alle Stränge der Reluktanzmaschine ist und zur voneinander unabhängigen Steuerung der Strangströme pro Strang ein erfindungsgemäßer Funktionsblock [(200) oder (201)] für negative Laststromrichtungen eingesetzt ist (Fig. 9).

3. Schaltungsanordnung nach Anspruch 1, **dadurch gekennzeichnet, daß** ein erfindungsgemäßer Funktionsblock für positive Laststromrichtung [(101) oder (100)] gemeinsam für alle Stränge der Reluktanzmaschine ist und zur voneinander unabhängigen Steuerung der Strangströme pro Strang ein erfindungsgemäßer Funktionsblock [(200) oder (201)] für negative Laststromrichtungen eingesetzt ist (Fig. 10).

4. Schaltungsanordnung nach Anspruch 2, **dadurch gekennzeichnet, daß** der Einquadrant-Gleichstromsteller für positive Laststromrichtung (10) gegen einen solchen für negative Laststromrichtung (20) getauscht wurde und die erfindungsgemäßen Funktionsblöcke [(200) oder (201)] ebenfalls gegen solche mit umgekehrter Laststromrichtung [(100) oder (11)] getauscht wurden Fig. (11).

5. Schaltungsanordnung nach Anspruch 3, **dadurch gekennzeichnet, daß** der erfindungsgemäße Funktionsblock für positive Laststromrichtung ((101) oder (100)) gegen einen solchen für negative Laststromrichtung [(201) oder (200)] getauscht wurde und die erfindungsgemäßen Funktionsblöcke [(200) oder (201)] ebenfalls gegen solche mit umgekehrter Laststromrichtung [(100) oder (101)] getauscht wurden (Fig. 12).

6. Schaltungsanordnung nach Anspruch 2, **dadurch gekennzeichnet, daß** der steuerbare elektronische Schalter (1) im Einquadrant-Gleichstromsteller (10) immer eingeschaltet und **dadurch** die zugehörige Diode (2) immer ausgeschaltet bleibt, so daß beide Bauelemente eingespart werden, weil auf Energieeinspeisung in die Gleichspannungsquelle (30) verzichtet wird.

7. Schaltungsanordnung nach Anspruch 3, **dadurch gekennzeichnet, daß** der steuerbare elektronische Schalter (1) im erfindungsgemäßen Funktionsblock (101) immer eingeschaltet und **dadurch** die zugehörige Diode (2) immer ausgeschaltet bleibt, so daß beide Bauelemente eingespart werden, weil auf Energierückspeisung in die Gleichspannungsquelle (30) verzichtet wird.

8. Schaltungsanordnung nach Anspruch 4, **dadurch gekennzeichnet, daß** der steuerbare elektronische Schalter (3) im Einquadrant-Gleichstromsteller (20) immer eingeschaltet und **dadurch** die zugehörige Diode (4) immer ausgeschaltet bleibt, so daß beide Bauelemente eingespart werden, weil auf Energierückspeisung in die Gleichspannungsquelle (30) verzichtet wird.

9. Steuerverfahren für eine Schaltungsanordnung nach Anspruch 3 bzw. 5, **dadurch gekennzeichnet, daß** durch periodisches Ein- und Ausschalten der steuerbaren elektronischen Schalter in den erfindungsgemäßen Funktionsblöcken [(200) oder (201) bzw. (100) oder (101)] bei nicht rotierender Welle der Reluktanzmaschine eine gesteuerte Aufladung des Energiespeichers (31) aus der Gleichspannungsquelle (30) vorgenommen wird.

## Claims

1. Circuit arrangements for power electronic converters, which are converting electrical energy from DC-voltage sources (30) in order to realize variable speed operation of reluctance machines, using bridge circuits composed of one-quadrant-choppers for positive load current direction (10) and one-quadrant-choppers for negative load current dircetion (20), **characterized by** the features, that one, or several or all the known one-quadrant-choppers [(10) resp. (20)] are replaced by functional modules [(100) or (101) resp. (200) or (201)], which are compatible with respect to their power terminals, featuring an internal energy storage device ((9) or (31)) and featuring at least one additional switching state, where the output voltage is more positive (higher) compared to known one-quadrant-choppers ((10) or (20) and one other additional switching state where the output voltage is more negative (lower) compared to known one-quadrant-choppers ((10) or (20)).

2. Circuit arrangement according to claim 1, **charac-**

terized by the features, that the one-quadrant-chopper for the positive load current direction (10) is common for all the stator coils of the reluctance machine and - in order to control the stator currents independently from each other - one functional module [(200) or (201)] for negative load current direction according to the invention is applied per stator coil (Fig. 9).

3. Circuit arrangement according to claim 1, **characterized by** the features, that one functional module for positive load current direction [(101) or (100)] according to the invention is common for all the stator coils of the reluctance machine and - in order to control the stator currents independently from each other - one functional module for negative load current direction [(200) or (201)] is applied per stator coil (Fig. 10).

4. Circuit arrangement according to claim 2, **characterized by** the features, that the one-quadrant-chopper for the positive load current direction (10) is replaced by a one quadrant-chopper for negative load current direction (20) and the functional modules [(200) or (201)] are also replaced by those with reversed load current direction [(100) or (101)], (Fig. 11).

5. Circuit arrangement according to claim 3, **characterized by** the features, that the functional modules for positive load current direction [(101) or (100)] are replaced by those for negative load current direction [(201) or (200)], and the remaining functional modules [(200) or (201)], are also replaced by those with reversed load current direction [(100) or (101)] (Fig. 12).

6. Circuit arrangement according to claim 2, **characterized by** the features, that the controlled electronic switch (1) in the one-quadrant-chopper (10) remains always in its on state and, therefore, the corresponding diode (2) raimains always in its off state, so that both components are dispensed with, because the option to feed back energy into the DC-voltage source (30) is abandoned.

7. Circuit arrangement according to claim 3, **characterized by** the features, that the controlled electronic switch (1) in the functional module (101) remains always in its on state and, therefore, the corresponding diode (2) remains always in its off state, so that both components are dispensed with, because the option to feed back energy into the DC-voltage source (30) is abandoned.

8. Circuit arrangement according to claim 4, **characterized by** the features, that the controlled electronic switch (3) in the one-quadrant-chopper (20) remains always in its on state and, therefore, the corresponding diode (2) remains always in its off state, so that both components are dispensed with, because the option to feed back energy into the DC-voltage source (30) is abandoned.

9. Method of control for a circuit arrangement according to claim 3 resp. 5, **characterized by** the features, that a controlled charging of the energy storage device (31) from the DC-voltage source (30) is achieved by periodically switching the controlled electronic switches in the functional modules [(200) or (201) resp. (100) or (101)], while the rotor shaft of the reluctance machine is not rotating.

## Revendications

1. Des arrangements des circuits de l'électronique de puissance qui convertissent l'énergie électrique des sources du tension continue (30) à l'aide des ponts qui consistent en hacheurs mono-quadrants pour le sens du courant positif (10) et des hacheurs mono-quadrants pour le sens du courant négatif (20) au but d'exercer des machines à réluctance commutée avec une vitesse de rotation variable sont **caractérisés par** les points figurant ci-dessous:

Un, plusieurs ou tous les hacheurs mono-quadrants [(10) resp.(20)] sont remplacés par des blocs de fonction compatibles concernant les connectiques de la puissance [(100) ou (101) resp.(200) ou (201)] ou par un accumulateur interne [(9) ou (31)] qui ont au moins un état de commande supplémentaire dans qui la tension de sortie est plus positive qu'aux hacheurs mono-quadrants [(10) ou (20)] et qui ont au moins un état de commande supplémentaire dans qui la tension de sortie est plus négative qu'aux hacheurs mono-quadrants [(10) ou (20)].

2. Un arrangement des circuits selon revendication 1 qui est **caractérisé par** les points suivants:

L'hacheur mono-quadrant pour le sens positif du courant (10) est commun pour tous les bobinages du moteur SR. Pour la commande indépendant l'un de l'autre des courants du stator, un bloc de fonction pour le sens négatif du courant correspondant à l'invention [(200) ou (201)] est utilisé pour chaque bobinage (fig. 9).

3. Un arrangement des circuits selon revendication 1 qui est **caractérisé par** les points suivants:

Un bloc de fonction correspondant à l'invention pour le sens positif du courant [(101) ou (100)] est commun pour tous les bobinages du moteur SR. Pour la commande indépendant l'un de l'autre des courants du stator, un bloc de fonction pour le sens négatif du courant correspondant à l'invention [(200) ou (201)] est utilisé pour chaque bobinage (fig. 10).

4. Un arrangement des circuits selon revendication 2 qui est **caractérisé par** les points suivants:

L'hacheur mono-quadrant pour le sens positif du courant (10) est replacé par un tel pour le sens négatif du courant (20). Les blocs de fonction correspondants à l'invention [(200) ou (201)] sont auss remplacés par des tels avec un sens inverse du courant [(100) ou (101)], (fig. 11).

5. Un arrangement des circuits selon revendication 3 qui est **caractérisé par** les points suivants:

Le bloc de fonction correspondant à l'invention pour le sens positif du courant [(101) ou (100)] est remplacé par un tel pour le négatif du courant [(200) ou (201)]. Les blocs de fonction correspondant à l'invention [(200) ou (201)] sont aussi remplacés par des tels avec un sens inverse du courant [(100) ou (101)], (fig. 12).

6. Un arrangement des circuits selon revendication 3 qui est **caractérisé par** les points suivants:

Le commutateur électronique réglable (1) dans l'hacheur mono-quadrant (10) est toujours mis en marche. De cette manière, la diode correspondant (2) est toujours mise hors marche. Toutes les deux éléments sont économisés parce qu'on n'alimente pas de l'énergie dans la source de tension continue (30).

7. Un arrangement des circuits selon revendication 3 qui est **caractérisé par** les points suivants:

Le commutateur électronique réglable (1) dans le bloc de fonction correspondant à l'invention (101) est toujours mis en marche. De cette manière, la diode correspondant (2) est toujours mise hors marche. Toutes les deux éléments sont économisés parce qu'on ne réintroduit pas de l'énergie dans la source de tension continue (30).

8. Un arrangement des circuits selon revendication 4 qui est **caractérisé par** les points suivants:

Le commutateur électronique réglable (3) dans l'hacheur mono-quadrant (20) est toujours mis en marche. De cette manière, la diode correspondant (4) est toujours mise hors marche. Toutes les deux éléments sont économisés parce qu'on ne réintroduit pas de l'énergie dans la source de tension continue (30).

9. Un procédé de commande pour un arrangement des circuits selon revendication 3 resp. 5 qui est **caractérisé par** les points suivants:

Si l'arbre du moteur SR ne tourne pas, un couplage marche-arrêt periodique des commutateurs électroniques réglables dans les blocs de fonction correspondant à l'invention [(200) ou (201) resp.(100) ou (101)] cause une charge dirigé de l'accumulateur (31) de la source de tension continue (30).

**Fig. 1**

**Fig. 2**

Fig. 3

Fig. 4

Fig. 5

Fig. 6

Fig. 7

Fig. 8

Fig. 9

Fig. 10

Fig. 11

Fig. 12

Fig. 13

Fig. 14

17

| Zustand | Schalter | | Ausgangsspannung | Energiespeicher |
|---|---|---|---|---|
| Nr. | 1 | 5 | $U_{X1}$ | sign(dW/dt) |
| 1 | 0 | 0 | $+U_C+U_d$ | +1 |
| 2 | 0 | 1 | $+U_d$ | 0 |
| 3 | 1 | 1 | $-U_C$ | -1 |
| 4 | 1 | 0 | 0 | 0 |

Fig. 15: zu 100

| Zustand | Schalter | | Ausgangsspannung | Energiespeicher |
|---|---|---|---|---|
| Nr. | 3 | 5 | $U_{X2}$ | sign(dW/dt) |
| 1 | 0 | 0 | $-U_C$ | +1 |
| 2 | 0 | 1 | 0 | 0 |
| 3 | 1 | 1 | $+U_C+U_d$ | -1 |
| 4 | 1 | 0 | $+U_d$ | 0 |

Fig. 16: zu 200

| Zustand | Schalter | | | Ausgangsspannung | Energiespeicher |
|---|---|---|---|---|---|
| Nr. | 1 | 5 | 7 | $U_{X1}$ | sign(dW/dt) |
| 1 | 0 | 0 | 0 | $+U_C+U_d$ | +1 |
| 2 | 0 | 1 | 0 | $+U_d$ | 0 |
| 3 | 1 | 1 | 1 | $-U_C$ | -1 |
| 4 | 1 | 0 | 1 | 0 | 0 |
| 5 | 1 | 0 | 0 | $+U_C$ | +1 |
| 6 | 1 | 1 | 0 | 0 | 0 |
| 7 | 0 | 1 | 1 | $-U_C+U_d$ | -1 |
| 8 | 0 | 0 | 1 | $+U_d$ | 0 |

Fig. 17: zu 101

| Zustand | Schalter | | | Ausgangsspannung | Energiespeicher |
|---|---|---|---|---|---|
| Nr. | 3 | 5 | 7 | $U_{X2}$ | sign(dW/dt) |
| 1 | 0 | 0 | 0 | $-U_C$ | +1 |
| 2 | 0 | 1 | 0 | 0 | 0 |
| 3 | 1 | 1 | 1 | $+U_C+U_d$ | -1 |
| 4 | 1 | 0 | 1 | $+U_d$ | 0 |
| 5 | 1 | 0 | 0 | $-U_C+U_d$ | +1 |
| 6 | 1 | 1 | 0 | $+U_d$ | 0 |
| 7 | 0 | 1 | 1 | $+U_C$ | -1 |
| 8 | 0 | 0 | 1 | 0 | 0 |

Fig. 18: zu 201